# EUROPEAN PATENT APPLICATION

(11) **EP 4 032 864 A1**
(43) Date of publication of application: **27.07.2022**
(21) Application number: 20876964.6
(22) Date of filing: 14.10.2020
(51) Int. Cl.: C02F 3/30, C02F 3/28, C02F 3/02

(54) **MABR SEWAGE TREATMENT TANK, MABR SEWAGE TREATMENT SYSTEM AND METHOD OF USING SAME**

(30) Priority: 16.10.2019 CN 201910980727
(71) Applicant: Tianjin Hydroking SCI & Tech Ltd., Nankai District Tianjin 300384 (CN)
(72) Inventor: WANG, Guofeng, Tianjin 300384 (CN); CAO, Cuicui, Tianjin 300384 (CN); ZHAO, Yanan, Tianjin 300384 (CN); WEI, Hongyong, Tianjin 300384 (CN); TIAN, Zhongyan, Tianjin 300384 (CN); ZHAO, He, Tianjin 300384 (CN); LI, Hailei, Tianjin 300384 (CN); TANG, Wei, Tianjin 300384 (CN); BAI, Junliang, Tianjin 300384 (CN); YANG, Xianwen, Tianjin 300384 (CN); YAN, Xiaojun, Tianjin 300384 (CN); HOU, Jiayan, Tianjin 300384 (CN)
(74) Representative: Gonella, Mario
(86) International application number: PCT/CN2020/120800
(87) International publication number: WO 2021/073522

(57) **Abstract**

The present application relates to the technical field of sewage treatment, and discloses an MABR sewage treatment tank, an MABR sewage treatment system and a method of using same. The MABR sewage treatment tank (4) comprises at least two of an MABR anaerobic treatment unit, an MABR anoxic treatment unit and an MABR aerobic treatment unit, the at least two elements being mutually communicated. The MABR anaerobic treatment unit, the MABR anoxic treatment unit and the MABR aerobic treatment unit are all provided therein with a plurality of MABR modular treatment units (411), which can be disposed in the MABR anaerobic treatment unit, the MABR anoxic treatment unit and the MABR aerobic treatment unit for immediate use in sewage treatment. Each of the MABR modular treatment units (411) primarily comprises an MABR membrane assembly and a membrane assembly frame. The present application can effectively increase sewage treatment efficiency without having to change the amount of land occupied by an existing sewage treatment facility, achieving the purpose of upgrading or capacity expansion.

## Description

### Cross-reference to Related Application

The present disclosure claims the priority to the Chinese patent application with the filing No. CN201910980727.3 filed with the Chinese Patent Office on October 16, 2019, and entitled "MABR Sewage Treatment Tank, MABR Sewage Treatment System and Method of Using Same", the contents of which are incorporated herein by reference in entirety.

### Technical Field

The present disclosure relates to the technical field of sewage treatment, and in particular to an MABR sewage treatment tank, an MABR sewage treatment system, and a method of using the same.

### Background Art

In recent years, with the gradual increase of sewage discharge quantity in cities and towns, the treatment capacity of the existing sewage treatment plants is limited. Upgrading and transforming the sewage treatment plants have already been put on the agenda. At present, in most cases in the prior art, the sewage treatment tank is upgraded at a single level or an integrated treatment facility is added to strengthen the treatment effectiveness. However, the effectiveness of the integrated treatment is relatively low while the addition of processes and equipment is increased. Meanwhile, the single-level or integrated equipment upgrade still cannot meet the overall improvement needs of the existing treatment process.

Therefore, based on the existing sewage treatment plants, the research and development of a system for upgrading and increasing the treatment capacity of sewage treatment facilities without increasing land use are urgently needed.

In view of this, the present disclosure is specifically proposed.

### Summary

An embodiment of the present disclosure provides a sewage treatment tank, wherein the treatment tank is provided with several MABR modular treatment units. The sewage treatment efficiency can be significantly improved without changing the area occupied by the existing sewage treatment facility. Thereby, achieving the goal of upgrading or capacity expansion.

An embodiment of the present disclosure further provides a sewage treatment system, wherein the sewage treatment system includes the above sewage treatment tank.

An embodiment of the present disclosure further provides a method of using the sewage treatment system.

Optionally, an embodiment of the present disclosure provides an MABR sewage treatment tank, wherein the sewage treatment tank includes an arrangement of a combination MABR anaerobic treatment unit, MABR anoxic treatment unit or MABR aerobic treatment unit connected to each other;
all of the MABR anaerobic treatment units, the MABR anoxic treatment units and the MABR aerobic treatment units are provided therein with several MABR modular treatment units, and the MABR modular treatment units are disposed, in such a manner that the MABR modular treatment units are put when to be used, in the MABR anaerobic treatment unit, the MABR anoxic treatment unit, and the MABR aerobic treatment unit for treatment of sewage; and
each modular treatment unit is mainly composed of an MABR membrane assembly, a membrane assembly frame, and a corresponding pipeline control valve.

Optionally, the MABR anaerobic treatment unit, the MABR anoxic treatment unit, and the MABR aerobic treatment unit are all in communication with a gas supply pipeline, and the gas supply pipeline is configured to provide the gas required by the MABR modular treatment units during sewage treatment.

Optionally, the gas supply pipeline is provided with a valve, and the valve is configured to regulate the volume and pressure of gas entering the MABR anaerobic treatment unit, the MABR anoxic treatment unit, or the MABR anoxic treatment unit.

Optionally, the gas supply pipeline includes a main gas supply pipe, a branch gas pipe, and a bottom gas pipe; the branch gas pipe and the bottom gas pipe are both in communication with the gas supply pipeline, and the branch gas pipe and the bottom gas pipe are provided with a valve for controlling and regulating the gas flow.

Optionally, the several MABR modular treatment units in communication in a serial or parallel connection manner through the branch gas pipe.

Optionally, the MABR treatment unit is further provided with an aerator, the aerator is in communication with the bottom gas pipe, the use of the aerator is controlled by a control valve, and the aerator is operated intermittently.

Optionally, the dissolved oxygen content of the MABR anaerobic treatment unit is 0-0.2 mg/L.

Optionally, the dissolved oxygen content of the MABR anoxic treatment unit is 0.2-0.5 mg/L.

Optionally, the dissolved oxygen content of the MABR aerobic treatment unit is 1.0-3.0 mg/L.

Optionally, an embodiment of the present disclosure provides an MABR sewage treatment system, wherein the MABR sewage treatment system includes the above MABR sewage treatment tank.

Optionally, the sewage treatment system includes an adjusting tank, a pre-treatment tank, a primary sedimentation tank, the above MABR sewage treatment tank, a secondary sedimentation tank, and a dosing device being in communication in sequence.

Optionally, a method of using the above MABR sewage treatment system provided in an embodiment of the present disclosure specifically includes steps of:
(1) implanting the MABR modular treatment units in a form of a single module or multiple modules into an anaerobic region, an anoxic region, and an aerobic region of an existing or newly established sewage treatment plant;
(2) adjusting the dissolved oxygen content in the MABR sewage treatment tank to meet the anaerobic, anoxic, aerobic dissolved oxygen requirement of treatment regions, or by adjusting the configuration of respective treatment units; and
(3) using an outer surface of a hollow fiber membrane of the MABR membrane assembly to form a biofilm structure to achieve synchronous nitrification and denitrification effects in the same MABR sewage treatment tank, thereby purifying the sewage.

Compared with the prior art, the present disclosure has the following beneficial effects.

The sewage treatment tank provided in the embodiments of the present disclosure includes an arrangement of a combination of the MABR anaerobic treatment unit, MABR anoxic treatment unit and MABR aerobic treatment unit connected to each other; all of the MABR anaerobic treatment unit, the MABR anoxic treatment unit and the MABR aerobic treatment unit is provided therein with several MABR modular treatment units; the MABR modular treatment units are disposed, in such a manner that the MABR modular treatment units are put when to be used, in the MABR anaerobic treatment unit, the MABR anoxic treatment unit, and the MABR aerobic treatment unit for treatment of sewage; and the modular treatment unit is mainly composed of an MABR membrane assembly and a membrane assembly frame. The sewage treatment efficiency is effectively improved without changing the area occupied by the existing sewage treatment facility, and the purpose of upgrading (standard upgrading) or capacity expansion is achieved.

The sewage treatment system provided in the embodiments of the present disclosure, which can include the above sewage treatment tank, effectively improves the sewage treatment efficiency, and the upgrade or capacity expansion of the sewage treatment system is achieved without changing the existing sewage treatment.

### Brief Description of Drawings

In order to more clearly illustrate the technical solutions in specific embodiments of the present disclosure or in the prior art, drawings which need to be used for the description of the specific embodiments or the prior art will be introduced briefly below, and apparently, the drawings in the description below merely show some embodiments of the present disclosure, and a person ordinarily skilled in the art still could obtain other drawings in light of these drawings without creative efforts.
FIG. 1 is an overall structural schematic top view of a sewage treatment tank provided in an embodiment of the present disclosure;
FIG. 2 is a sectional structural schematic view of the sewage treatment tank provided in an embodiment of the present disclosure; and
FIG. 3 is a flow schematic diagram of the sewage treatment system provided in an embodiment of the present disclosure.

Reference signs: 4-sewage treatment tank; 41-MABR treatment unit; 411-MABR modular treatment unit; 413-gas supply pipeline; 412-valve; 42-water inlet; 43-water outlet; 44-partition plate; 441-water passing hole; 4131-main gas supply pipe; 4132-branch gas pipe; 4133-bottom gas pipe; 414-aerator; 46-propeller; 45-fixing bracket; 1-adjusting tank; 2-pre-treatment tank; 3-primary sedimentation tank; 5-secondary sedimentation tank; 6-dosing device.

### Detailed Description of Embodiments

Technical solutions of the present disclosure will be described clearly and completely below in combination with accompanying drawings, and apparently, the embodiments described are only some but not all embodiments of the present disclosure. Based on the embodiments in the present disclosure, all the other embodiments obtained by a person ordinarily skilled in the art without using creative efforts shall fall within the scope of protection of the present disclosure.

An embodiment of the present disclosure provides an MABR sewage treatment tank 4, wherein the sewage treatment tank 4 may include at least two of an MABR anaerobic treatment unit, an MABR anoxic treatment unit and an MABR aerobic treatment unit being in communication with each other;
the MABR anaerobic treatment unit, the MABR anoxic treatment unit and the MABR aerobic treatment unit may be provided therein with several MABR modular treatment units 411, wherein the MABR modular treatment units 411 are disposed, in such a manner that the MABR modular treatment units are put when to be used, in the MABR anaerobic treatment unit, the MABR anoxic treatment unit, and the MABR aerobic treatment unit for treatment of sewage; and
the modular treatment unit is mainly composed of an MABR membrane assembly, a membrane assembly frame, and a corresponding pipeline control valve 412.

The MABR (membrane aeration biomembrane reactor) performs bubbleless aeration on the water body and develops a biofilm growing on the polymer membrane surface by using an aeration membrane assembly. In the aeration process, oxygen and nutrients are respectively utilized by microorganisms from two sides of a hollow fiber membrane through effects such as concentration difference driving and microorganism adsorption. The microorganisms decompose pollutants in the water body into simple inorganic metabolites while utilizing the nutrients. Therefore, in the sewage treatment process, on one hand, the MABR modular treatment units 411 provide attachment media for the growth of the biofilm; on the other hand, the MABR introduces high-pressure oxygen or high-pressure air into the membrane lumen, so that the oxygen permeates through the membrane to supply oxygen for the biomembrane attached to the surface of the aeration membrane in a bubbleless form, thereby purifying the water body.

The "at least two" in the above in the present disclosure refers to the combination of two or more of the MABR anaerobic treatment unit, the MABR anoxic treatment unit and the MABR aerobic treatment unit, which may be more than one. For example, the sewage treatment tank 4 may be a combination of MABR anaerobic treatment units and one MABR anoxic treatment unit, a combination of MABR anaerobic treatment units and MABR anoxic treatment units, or a combination of MABR anaerobic treatment units, MABR anoxic treatment units, and MABR aerobic treatment units.

The specific raw materials and functions of the MABR modular treatment units 411 provided in the embodiment of the present disclosure for sewage treatment are as follows.

The MABR sewage treatment tank 4 provided in the embodiment of the present disclosure may include at least two of the MABR anaerobic treatment unit. The MABR anoxic treatment unit and the MABR aerobic treatment unit, which are in communication with each other; the MABR anaerobic treatment unit, the MABR anoxic treatment unit and the MABR aerobic treatment unit are all provided therein with several MABR modular treatment units 411, and the MABR modular treatment units 411 are configured for treatment of sewage. Therefore, by adding the MABR modular treatment units 411 (to generate effects such as concentration difference driving and microorganism adsorption), the sewage treatment tank 4 of the embodiment of the present disclosure effectively improves the sewage treatment efficiency of the existing MABR anaerobic treatment unit, MABR anoxic treatment unit, and MABR aerobic treatment unit, further achieving the purpose of upgrading or capacity expansion without changing the area occupied by the existing sewage treatment facility.

Optionally, the MABR membrane assembly is composed of an MABR composite membrane and enclosure heads at two distal ends of the MABR composite membrane. The MABR composite membrane mainly consists of hollow fiber membranes. Optionally, the hollow fiber membrane is the composite membrane for MABR disclosed in CN203139913, and the composite membrane has the advantages of strong oxygen permeability, high strength, good membrane forming performance and the like.

As an optional embodiment, according to different dissolved oxygen contents, the above MABR treatment units 41 may be divided into MABR anaerobic treatment unit, MABR anoxic treatment unit, and MABR aerobic treatment unit. In the MABR modular treatment unit 411, oxygen permeates from inside to outside through membrane lumen of the hollow fiber membrane, and microorganisms are attached to the outer surface of the membrane filaments, gradually forming a biofilm on the membrane surface.

In the above, the hollow fiber membrane of the MABR anaerobic treatment unit is located in an anaerobic environment, but the biofilm structure on the surface of the membrane filaments can simultaneously realize nitrification, denitrification, decarbonization, and phosphorus removal (simultaneously removing COD and nitrogen) and so on; the hollow fiber membrane of the MABR anoxic treatment unit is located in an anoxic environment, but the microbial membrane film on the surface of the membrane filaments can also simultaneously realize nitrification, denitrification, decarbonization, phosphorus removal, etc. (simultaneously removing COD and nitrogen); and the hollow fiber membrane of the MABR aerobic treatment unit is located in an aerobic environment, a large number of aerobic microorganisms grow on the outer surfaces of the membrane filaments, thus the aerobic treatment is effective. The oxygen utilization ratio of the MABR membrane is high, which can save gas supply cost. The microorganisms are easily attached to the surfaces of the membrane filaments, and when there is a water quality impact or fluctuation in the system, part of the biofilm may fall off, but can be recovered in a short period of time, which features strong impact resistance.

In an optional embodiment of the embodiments of the present disclosure, the sewage treatment tank 4 may be provided with a water inlet 42 and a water outlet 43, wherein the water inlet 42 may be provided on a first MABR treatment unit 41, and the water outlet 43 may be provided on a last MABR treatment unit 41.

In an optional embodiment provided in the present disclosure, partition plates 44 may be vertically provided in the sewage treatment tank 4, to divide the sewage treatment tank 4 into a number of relatively independent regions. At the end of each partition plate 44 may be provided with a water passing hole 441, wherein the water passing hole on the partition plate closest to the water inlet 42 may be provided at an end portion of this partition plate away from the water inlet 42. The water passing holes on two adjacent partition plates may be respectively provided at two opposite end portions of corresponding partition plates, that is, the water passing holes may be alternately provided at the upper-end portion or the lower-end portion of the partition plates, wherein the water passing hole on the partition plate closest to the water outlet 43 may be provided at an end portion of the partition plate 44 away from the water outlet 43. Thus, after flowing through the longitudinal length of an independent region separated by the partition plates to flow through one MABR treatment unit 41, the sewage can enter the next independent region through the water passing hole 441, and so as to flow through the next MABR treatment unit 41. The sewage flows through respective independent regions of the sewage treatment tank 4 in an approximately "S" path in the sewage treatment tank 4. Maximizing the flow length of the sewage in a limited space.

Optionally, the partition plates 44 may be replaced with partition walls vertically provided in the sewage treatment tank 4. A flow path may be provided at an end of each partition wall, and the sewage can enter the next MABR treatment unit 41 from one MABR treatment unit 41 through the flow paths. Similarly, the positions for providing the flow paths are the same as the positions for providing the water passing holes.

In an optional implementation of the embodiments of the present disclosure, the MABR treatment unit 41 further may be provided with a fixing bracket 45, and a plurality of MABR membrane assemblies may be fixedly mounted on one fixing bracket 45, so that the MABR modular treatment units 411 are more firmly provided in the MABR treatment unit 41.

In an optional implementation of the embodiments of the present disclosure, all of the MABR anaerobic treatment unit, the MABR anoxic treatment unit, and the MABR aerobic treatment unit may be in connection with a gas supply pipeline 413. The gas supply pipeline 413 may be composed of the main gas supply pipe 4131, a branch gas pipe 4132, and a bottom gas pipe 4133. The bottom gas pipe 4133 further may be provided with at least one aerator 414. The branch gas pipe 4132 and the bottom gas pipe 4133 both may be in connection with the gas supply pipeline 413, the branch gas pipe 4132 and the bottom gas pipe 4133 both may be controlled by the valve 412. The valve 412 of the bottom gas pipe 4133 may operate intermittently, and is opened infrequently and for a short period of time.

As an optional implementation of the embodiments of the present disclosure, the gas supply pipeline 413 is provided with at least one branch gas pipe. Optionally, the gas supply pipeline 413 is provided with branch gas pipes corresponding to the MABR modular treatment units 411 one by one, and the branch gas pipes are configured to provide the gas required by the MABR modular treatment units 411 during the sewage treatment.

In the above optional embodiment, a valve 412 may be further provided on the main gas supply pipe 4131, the branch gas pipe 4132, and the bottom gas pipe 4133. The valve 412 is configured to regulate the volume and pressure of gas entering the MABR anaerobic treatment unit, the MABR anoxic treatment unit, and the MABR anoxic treatment unit.

Optionally, the branch gas pipe 4132 and the bottom gas pipe 4133 are respectively provided with valve 412, so as to regulate the flow rate of the gas.

In the above optional implementation of the embodiments of the present disclosure, the MABR treatment unit 41 is provided with at least one MABR modular treatment unit 411, and optionally, the MABR treatment unit 41 is provided with a number of MABR modular treatment units 411. The MABR modular treatment units 411 of the MABR treatment unit 41 are connected in a series or in a parallel manner through the branch gas pipe 4132.

As an optional implementation of the embodiments of the present disclosure, the MABR modular treatment units 411 may be in connection with each other in a series or a parallel manner, as long as the purpose of saving space is achieved.

In the optional implementation of the embodiments of the present disclosure, the MABR treatment unit 41 further may be provided with at least one aerator 414. Optionally, the MABR treatment unit 41 is provided with the aerators corresponding to the number of MABR treatment units 41, and the aerators 414 are in connection with the bottom gas pipe 4133.

Optionally, the aerator 414 may be provided below the MABR modular treatment unit 411.

As an optional implementation of the embodiments of the present disclosure, the aerator 414 may be operated intermittently and configured to open when the biofilm in the MABR modular treatment unit 411 is thick, so that the biofilm on the hollow fiber membrane may perform better degradation efficacy.

In an optional implementation of the embodiments of the present disclosure, the dissolved oxygen content of the MABR anaerobic treatment unit is 0-0.2 mg/L.

Preferably, the dissolved oxygen content of the MABR anoxic treatment unit is 0.2-0.5 mg/L.

Preferably, the dissolved oxygen content of the MABR aerobic treatment unit is 1.0-3.0 mg/L.

In an optional implementation of the embodiments of the present disclosure, the sewage treatment tank 4 further may be provided with a propeller 46.

As an optional implementation of the embodiments of the present disclosure, the above sewage treatment tank 4 may further be provided with at least one propeller 46 in the MABR treatment unit. The propellers 46 may be provided at intervals at end portions along the direction of the water flow in the MABR treatment unit. And optionally, the propellers 46 may be provided in the vicinity of the water passing holes of two adjacent MABR treatment units. The propeller is configured to push the water to flow into the sewage treatment tank 4 and between adjacent MABR treatment units. Thus improving the overall effect of the treatment of sewage. Optionally, the sewage treatment of the MABR sewage treatment tank 4 comprises the following specific steps:
(a) designing and calculating the number of MABR treatment units 41 and the number of MABR modular treatment units 411 in the MABR treatment units 41 according to water quality, water volume, and treating requirements; designing the arrangement of the MABR modular treatment units 411 in each treatment region;
(b) arranging the MABR modular treatment units 411 in the MABR treatment units 41 independently or connected in a series or parallel through the branch gas pipes which are connected to the main gas supply pipe 413. The branch gas pipe 4132, the bottom gas pipe 4133, and the valve 412 according to the number and arrangement manner of MABR treatment units 41 and MABR modular treatment units 411, and controlling the amount of gas supplied through the valve 412 provided on the corresponding gas pipe to satisfy the dissolved oxygen demand of each MABR treatment unit 41 and the layered structure demand of the biofilm,
   wherein the dissolved oxygen content of the water body in the corresponding MABR treatment units is controlled as follows: the dissolved oxygen content of the MABR anaerobic treatment unit may be 0-0.2 mg/L; the dissolved oxygen content of the MABR anoxic treatment unit may be 0.2-0.5 mg/L; the dissolved oxygen content of the MABR aerobic treatment unit may be 1.0-3.0 mg/L, and the activated sludge from sewage treatment plants and nutrients of pollutants in the sewage are utilized to perform microbial inoculation and biomembrane acclimation;
(c) controlling the gas supply pressure of each MABR treatment unit 41 at 0-80 kPa, and adjusting the gas supply pressure of each group of MABR modular treatment units 411 through the branch gas pipe 4132 and the valve 412 provided on the branch gas pipe; and
(d) adjusting the valve 412 provided on the corresponding gas pipe according to water quality, water volume, and treating requirements so that each MABR treatment unit 41 realizes the dissolved oxygen environment and the layered structure of the biofilm set thereby, to realize efficient removal of nitrogen, phosphorus, and organic carbon in the water body.

According to an embodiment of the present disclosure, a sewage treatment system including the above sewage treatment tank 4 is provided.

The sewage treatment system provided in the embodiments of the present disclosure can include the above sewage treatment tank 4, wherein the treatment system, by adding the MABR modular treatment units 411, effectively improves the sewage treatment efficiency in different existing dissolved oxygen ranges, and achieves the purpose of upgrading or capacity expansion without changing the existing sewage treatment.

According to an embodiment of the present disclosure, a method of using the above MABR sewage treatment system is provided, which specifically may include the following steps:
(1) implanting the MABR modular treatment units 411 in a form of a single module or multiple modules into an anaerobic region, an anoxic region, and an aerobic region of an existing or newly established sewage treatment plant;
(2) meeting the anaerobic/anoxic/aerobic dissolved oxygen requirement of treatment regions by adjusting the dissolved oxygen content in the MABR sewage treatment tank 4, or adjusting the matching of respective treatment units; and
(3) using the outer surface of the hollow fiber membrane of the MABR membrane assembly to form a biofilm structure to achieve simultaneous nitrification and denitrification in the same MABR sewage treatment tank 4, thereby purifying the sewage.

The technical solutions of the present disclosure will be further described below with reference to the embodiments and accompanying drawings.

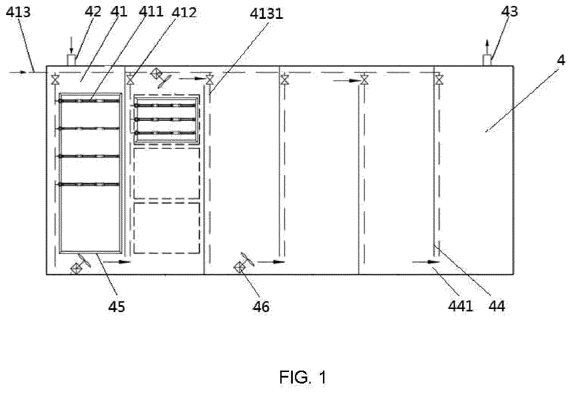

FIG. 1 is an overall structural schematic top view of the MABR sewage treatment tank 4 provided in an embodiment of the present disclosure.

As shown in FIG. 1, in an MABR sewage treatment tank 4, the MABR sewage treatment tank 4 may be composed of one MABR anaerobic treatment unit, two MABR anoxic treatment units, and three MABR anoxic treatment units. Specifically, the MABR treatment unit 41 closest to the water inlet 42 may be one MABR anaerobic treatment unit. The MABR anoxic treatment unit and the MABR aerobic treatment unit are sequentially provided in a direction from the water inlet 42 to the water outlet 43, wherein there may be, for example, two MABR anoxic treatment units and three MABR aerobic treatment units; pretreated sewage enters from an end of the MABR anaerobic treatment unit of the MABR tank and flows to the bottom of the tank, an incoming-water distributor is provided at the bottom to distribute the incoming water, and a gas source is supplied to each treatment region through the gas supply pipeline 413. In the MABR anaerobic treatment unit, one MABR membrane assembly frame can be used to mount and fix a designed number of MABR membrane assemblies on the MABR membrane assembly frame; and the MABR anoxic treatment units and the aerobic treatment units are provided with the MABR membrane assembly frames in a number corresponding to the number of corresponding treatment units. A designed number of MABR membrane assemblies are mounted and fixed in groups on each MABR membrane assembly frame, and the membrane assembly frame mounted with the MABR membrane assemblies is mounted inside the water tank.

The MABR sewage treatment tank 4 is not limited to the above layout, and the corresponding treatment regions can be adjusted according to the requirements of water quality and water volume.

The MABR sewage treatment tank 4 may be of a propelling type, each region is separated by the partition plate 44 or the partition wall. The partition plate 44 is provided with a water passing hole at an end portion opposite to the end portion of the previous partition plate provided with a water passing hole, and the sewage enters the next MABR treatment unit 41 from one MABR treatment unit 41 through the water passing hole; The sewage enters from the water inlet 42, sequentially enters the MABR anaerobic treatment unit, then flows through the water passing hole into the MABR anoxic treatment unit, and finally flows through the water passing hole into the MABR anoxic treatment unit. Optionally, at least one propeller 46 can be provided near the water passing hole in each treatment region.

The water passing holes on two adjacent partition plates in the MABR sewage treatment tank 4 may be respectively provided at two opposite end portions of corresponding partition plates. The water passing holes may be alternately provided at an upper end portion or a lower end portion of the partition plates, and correspondingly, the independent regions separated by the partition plates in the MABR sewage treatment tank 4 adopt a mode of water inlet and outlet at the opposite end portions. The water enters from below and goes out from above or enters from above and goes out from below. The water exiting end may be provided with an overflow weir, and after collection, the sewage is drained to the next process.

All of the MABR anaerobic treatment unit, the MABR anoxic treatment unit, and the MABR aerobic treatment unit are provided therein with several MABR modular treatment units 411, and the MABR modular treatment units 411 are configured for the treatment of sewage.

Referring to FIG. 1, the sewage treatment tank 4 is provided with the water inlet 42 and the water outlet 43, wherein the water inlet 42 is provided on the first MABR treatment unit 41 (MABR anaerobic treatment unit), and the water outlet 43 is provided on the last MABR treatment unit 41 (aerobic treatment unit).

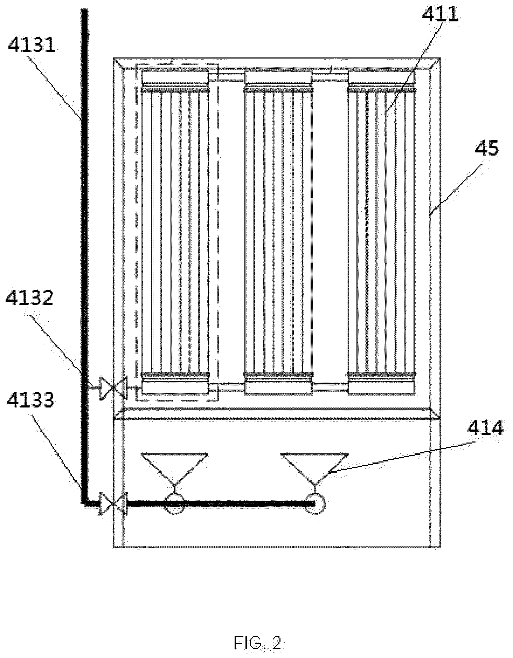

FIG. 2 is a sectional structural schematic view of the sewage treatment tank 4 provided in an embodiment of the present disclosure.

As shown in FIG. 2, the gas supply pipeline 413 may be composed of a main gas supply pipe 4131, a branch gas pipe 4132, and a bottom gas pipe 4133. Both the branch gas pipe 4132 and the bottom gas pipe 4133 may be in connection with the gas supply pipeline 413.

In the above optional implementation of the embodiments of the present disclosure, the MABR treatment unit 41 is further provided with a fixing bracket 45. A number of MABR membrane assemblies are fixed onto one fixing bracket 45, so that the MABR modular treatment units 411 are more firmly provided in the MABR treatment units 41.

In the above optional implementation of the embodiments of the present disclosure, a valve 412 may be further provided on the main gas supply pipe 4131, the branch gas pipe 4132, and the bottom gas pipe 4133. Valve 412 is configured to control the gas intake amount of the branch gas pipe 4132 and the bottom gas pipe 4133 to regulate the volume and pressure of the gas entering the corresponding MABR treatment units.

In an optional implementation of the embodiments of the present disclosure, the bottom gas pipe 4133 in the MABR treatment unit 41 further may be provided with an aerator 414. The aerator 414 may be in connection with the bottom gas pipe 4133. The aerator 414 may be provided below the MABR modular treatment unit 411, and the aerator 414 can be controlled by the valve 412 of the corresponding bottom gas pipe 4133 to intermittently operate the corresponding aerator 414.

In an optional implementation of the embodiments of the present disclosure, the sewage treatment tank 4 further may be provided with at least one propeller 46 in the MABR treatment unit. The propellers 46 may be provided at intervals at the end portions along the direction of the water flow in the MABR treatment unit. Optionally, the propellers 46 may be provided in the vicinity of the water passing holes of two adjacent MABR treatment units. The propeller 46 is configured to push the water to flow in the sewage treatment tank 4 and between adjacent MABR treatment units, thus improving the effect of the treatment of sewage.

Specific implementations of the sewage treatment tank 4 of an embodiment of the present disclosure are as follows.

The MABR sewage treatment tank 4 may be composed of one MABR anaerobic treatment unit, two MABR anoxic treatment units, and three MABR anoxic treatment units. The pretreated sewage (after primary sedimentation) enters from an end of the MABR anaerobic treatment unit, wherein an inflow end is provided with the incoming-water distributor. The independent regions separated by the partition plates in the MABR sewage treatment tank 4 adopt a mode of water inlet and outlet at opposite end portions, that is, the water enters from below and goes out from above or enters from above and goes out from below. The water flow sequentially enters the MABR anaerobic treatment unit, the MABR anoxic treatment unit, and the MABR aerobic treatment unit. The pollutants of the water body are degraded by the biofilm attached to the surface of the MABR membrane so that the sewage is purified. After being treated by the MABR sewage treatment tank 4, the water enters a secondary sedimentation tank and in subsequent processes. The water exiting end adopts an overflow weir or other forms to collect water discharged. The specific implementation process of the embodiments of the present disclosure may include the following steps.
(1) The MABR anaerobic treatment unit is provided therein with a membrane assembly frame. The MABR membrane assemblies are uniformly fixed on the membrane assembly frame according to the designed number. The MABR anoxic treatment units and the MABR aerobic treatment units are provided therein with a number of membrane assembly frames corresponding to the number of corresponding treatment units. The MABR membrane assemblies are fixed in groups on the membrane assembly frames, and the membrane assembly frame for fixing the MABR membrane assemblies is placed in the MABR anoxic treatment units and the MABR aerobic treatment units according to design and calculation.
(2) The gas source is supplied through the gas supply pipeline 413. Specifically, the main gas supply pipe 4131 extends transversely along a side of the MABR sewage treatment tank 4, and passes through the MABR anaerobic treatment unit, the MABR anoxic treatment unit, and the MABR aerobic treatment unit sequentially in a lateral direction; the main gas supply pipe 4131 is provided with a branch gas pipe 4132 at a corresponding treatment unit. The branch gas pipe 4132 extends in a longitudinal direction to be in communication with each membrane in a corresponding MABR membrane assembly, so as to supply gas thereto. The branch gas pipe is provided with the valve 412, and the dissolved oxygen content in each treatment unit is adjusted by controlling the corresponding valve, wherein the dissolved oxygen content of the MABR anaerobic treatment unit may be 0-0.2 mg/L, and the dissolved oxygen content of the MABR anoxic treatment unit may be 0.2-0.5 mg/L, and the dissolved oxygen content of the MABR aerobic treatment unit may be 1.0-3.0 mg/L.
(3) The bottom gas pipe 4133 is connected to the main gas supply pipe 4131. The bottom gas pipe 4133 is located below the MABR membrane assembly and extends in a corresponding treatment region, i.e., a corresponding MABR treatment unit. The aerator 414 provided on the bottom gas pipe 4133 is controlled by a control valve corresponding to the bottom gas pipe that can be intermittently operated. Each treatment region of the MABR sewage treatment tank 4 is separated by the partition plates 44 or partition walls, for example, the MABR anaerobic treatment unit is provided therein with at least one propeller 46. The propeller 46 may be provided at intervals at an end portion along the direction of the water flow in the MABR treatment unit. Optionally, the propeller 46 may be provided in the vicinity of the water passing holes of two adjacent MABR treatment units, and the propeller 46 is configured to push the water to flow in the sewage treatment tank 4 and between adjacent MABR treatment units. Thus improving the effect of the treatment of sewage.
(4) The tail end of the MABR aerobic treatment unit is provided with an overflow weir at the water exiting end. After collection, the sewage is drained to the next process treatment unit.

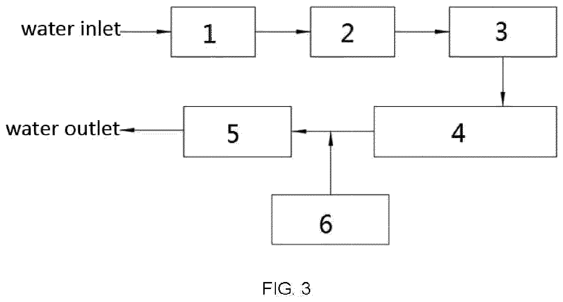

As shown in FIG. 3, an embodiment of the present disclosure provides a sewage treatment system, wherein the sewage treatment system may include an adjusting tank 1, a pre-treatment tank 2, a primary sedimentation tank 3, the sewage treatment tank 4 provided in the embodiments of the present disclosure, and a secondary sedimentation tank 5 in connection through pipelines.

In the above optional implementation of the embodiments of the present disclosure, the above sewage treatment tank 4 and secondary sedimentation tank 5 further may be provided with a dosing device 6 therebetween.

The sewage treatment system provided in the embodiments of the present disclosure can include the above sewage treatment tank 4, wherein the treatment system, by adding the MABR assemblies, effectively improves the sewage treatment efficiency in different existing dissolved oxygen ranges. Thereby achieving the purpose of upgrading or capacity expansion without changing the existing sewage treatment.

The treated sewage volume of a certain municipal sewage treatment plant is 5000 m³/d, the water quality of discharged water is required to meet the Level I-B standard of Discharge Standard of Pollutants for Municipal Wastewater Treatment Plant (GB18918-2002). The treatment process is A20 process, and the discharged water is discharged into a nearby channel. As the environmental governance requirements become increasingly strict, the discharge standard of the sewage treatment plant was raised to the Level I-A standard of the Discharge Standard of Pollutants for Municipal Wastewater Treatment Plant (GB18918-2002). The main water quality index of the discharged water reaches COD≤50 mg/L, ammonia nitrogen≤5 mg/L, TN≤15 mg/L, and TP≤0.5 mg/L. The present sewage treatment plant was modified. A part of the biochemical treatment process was adopted, for modification for a treated sewage volume of 1000 m³/d. One MABR anaerobic treatment unit, two MABR anoxic treatment units, and four MABR aerobic treatment units provided in the embodiments of the present disclosure were provided. 1400 MABR membrane assemblies were deployed in total. The proportion of the three types of treatment units was 1:3:10. The treated discharged water after the modification reaches the following main indexes: COD≤45 mg/L, ammonia nitrogen≤4 mg/L, TN≤15 mg/L, TP≤0.5 mg/L, which can satisfy the Level I-A standard of the Discharge Standard of Pollutants for Municipal Wastewater Treatment Plant (GB18918-2002). Therefore the effect of improving the water quality is achieved without changing the original tank capacity.

The treated sewage volume of a certain municipal sewage treatment plant is 10000 m³/d, the water quality of discharged water is required to meet the first-grade standard A of Discharge Standard of Pollutants for Municipal Wastewater Treatment Plant (GB18918-2002), the treatment process is A2O process, and the discharged water is discharged into a nearby channel. As the volume of municipal sewage is increased, the sewage volume entering the sewage treatment plant is greatly increased, such that the existing sewage treatment facility can hardly meet the sewage governance requirements. The present sewage treatment plant is modified as required. A part of the biochemical treatment process was adopted, for modification for a treated sewage volume of 2000 m³/d. Two MABR anaerobic treatment units, three MABR anoxic treatment units, and five MABR aerobic treatment units provided in the embodiments of the present disclosure are provided, 3000 MABR membrane assemblies are implanted in total, the proportion of the three types of treatment units is 1:3:11, and the original water volume is increased by 25%. The treated discharged water after the modification reaches the following main indexes: COD≤50 mg/L, ammonia nitrogen≤5 mg/L, TN≤15 mg/L, TP≤0.5 mg/L, which can satisfy the first-grade standard A of Discharge Standard of Pollutants for Municipal Wastewater Treatment Plant (GB18918-2002), therefore the effect of capacity expansion can be achieved without changing the original tank capacity.

In summary, the sewage treatment tank 4 provided in the embodiments of the present disclosure treats the sewage by the MABR treatment unit 41 provided with several MABR modular treatment units 411. Meanwhile, the MABR treatment unit 41 is further provided with the gas supply pipeline 413, and the gas supply pipeline 413 is provided with the valve 412 configured to control the dissolved oxygen content of each MABR treatment unit 41. Furthermore, the sewage treatment efficiency of the sewage treatment unit in different existing dissolved oxygen ranges is effectively improved. The purpose of upgrading or capacity expansion is achieved without changing the area occupied by the existing sewage treatment facility.

Finally, it should be explained that the various embodiments above are merely used for illustrating the technical solutions of the present disclosure rather than limiting the present disclosure; although a detailed description is made to the present disclosure concerning various preceding embodiments, those ordinarily skilled in the art should understand that they still could modify the technical solutions recited in various preceding embodiments, or make equivalent substitutions to some or all of the technical features therein; and these modifications or substitutions do not make the corresponding technical solutions essentially depart from the scope of the technical solutions of various embodiments of the present disclosure.

### Industrial Applicability

The sewage treatment system provided in the embodiments of the present disclosure can include the sewage treatment tank 4 provided in the embodiments of the present disclosure, and the treatment system, by adding the MABR assemblies. This effectively improves the sewage treatment efficiency in different existing dissolved oxygen ranges and achieves the purpose of upgrading or capacity expansion without changing the existing sewage treatment.

## Claims

1. A membrane aerated biofilm reactor (MABR) sewage treatment tank (4) **characterized in that** the sewage treatment tank (4) is comprised of a combination of at least two of the MABR anaerobic treatment unit, the MABR anoxic treatment unit or the MABR aerobic treatment unit being in connection with each other;
wherein the MABR anaerobic treatment unit, the MABR anoxic treatment unit and the MABR aerobic treatment unit are all provided therein with several MABR modular treatment units; wherein the MABR modular treatment units are placed within the MABR anaerobic treatment unit, the MABR anoxic treatment unit and the MABR aerobic treatment unit for sewage treatment, in such a manner that the MABR modular treatment units are placed when needed to be used; and
each of the MABR modular treatment units is mainly composed of an MABR membrane assembly, a membrane assembly frame, and a corresponding pipeline control valve.

2. The MABR sewage treatment tank according to claim 1, wherein the MABR anaerobic treatment unit, the MABR anoxic treatment unit and the MABR aerobic treatment unit are all in connection with a gas supply pipeline, and the gas supply pipeline is configured to provide gas, which is required by the MABR modular treatment units during sewage treatment.

3. The MABR sewage treatment tank according to any one of claims 1 and 2, wherein the gas supply pipeline is provided with a valve, and the valve is configured to regulate the volume and pressure of gas entering the MABR anaerobic treatment unit, the MABR anoxic treatment unit, or the MABR aerobic treatment unit.

4. The MABR sewage treatment tank according to any one of claims 2 to 3, wherein the gas supply pipeline comprises of least a main gas supply pipe, a branch gas pipe, and a bottom gas pipe, wherein branch gas pipes and the bottom gas pipe are both in connection with the gas supply pipeline, and each of the branch gas pipes and the bottom gas pipe is provided with a valve for controlling and regulating a gas flow.

5. The MABR sewage treatment tank according to any one of the preceding claims, wherein the MABR modular treatment units are in connection in a series or parallel manner through the branch gas pipes.

6. The MABR sewage treatment tank according to any one of the preceding claims, wherein the bottom gas pipe in the MABR modular treatment units is further provided with an aerator, the aerator is in connection with the bottom gas pipe, use of the aerator is controlled by a control valve corresponding to the bottom gas pipe, and the aerator is operated intermittently.

7. The MABR sewage treatment tank according to any one of the preceding claims, wherein the dissolved oxygen content of the MABR anaerobic treatment unit is 0-0.2 mg/L;
the dissolved oxygen content of the MABR anoxic treatment unit is 0.2-0.5 mg/L; and
the dissolved oxygen content of the MABR aerobic treatment unit is 1.0-3.0 mg/L.

8. A membrane aerated biofilm reactor (MABR) sewage treatment system, **characterized in that** the MABR sewage treatment system comprises the MABR sewage treatment tank according to any one of claims 1~7.

9. The MABR sewage treatment system according to claim 8, wherein the sewage treatment system comprises an adjusting tank, a pre-treatment tank, a primary sedimentation tank, the MABR sewage treatment tank according to any one of claims 1-7, a secondary sedimentation tank, and a dosing device, which are in connection in sequence.

10. A method of using the membrane aerated biofilm reactor (MABR) sewage treatment system according to claim 8 or 9, **characterized by** comprising steps of:
(1) implanting the MABR modular treatment units in a form of a single module or multiple modules into an anaerobic region, an anoxic region, and an aerobic region of an existing or newly established sewage treatment plant;
(2) adjusting the dissolved oxygen content in the MABR sewage treatment tank to meet the anaerobic, anoxic or aerobic dissolved oxygen requirement of treatment regions, or adjusting the configuration of respective treatment units; and
(3) using an outer surface of a hollow fiber membrane of an MABR membrane assembly to develop a microbial film structure to achieve simultaneous nitrification and denitrification within the same MABR sewage treatment tank, thereby treating the sewage.
